# EUROPEAN PATENT SPECIFICATION

(11) **EP 0 716 218 B1**
(45) Date of publication and mention of the grant of the patent: **22.03.2000**
(21) Application number: 95308806.9
(22) Date of filing: 05.12.1995
(51) Int. Cl.: F01D 11/08, F01D 11/12, F04D 27/02

(54) **Compressor and turbine shroud**
Kompressor- und Turbinenmantel
Virole de compresseur et de turbine

(30) Priority: 05.12.1994 US 350208
(43) Date of publication of application: 12.06.1996
(73) Proprietor: UNITED TECHNOLOGIES CORPORATION, Hartford, CT 06101 (US)
(72) Inventor: Khalid, Syed J., Palm Beach Gardens, Florida 33410 (US)
(74) Representative: Leckey, David Herbert

(56) References cited:
- EP-A- 0 092 955
- DE-A- 3 147 713
- DE-B- 1 022 745
- FR-A- 2 325 830
- FR-A- 2 551 130
- GB-A- 793 886
- GB-A- 2 017 228
- US-A- 4 781 530

## Description

This invention relates to gas turbines, in particular, techniques for improving compressor stall characteristics.

In a gas turbine engine, compressor blades are attached to a rotating disk with the blade tips as close as possible to the "endwall". Different sealing techniques are used to minimize the adverse effects of tip-endwall clearance and tip rub on the seal. Compressor rotor blade tip-endwall clearance growth significantly reduces compressor stall margin, mainly due to leakage between the pressure and suction sides of the blade. That leakage reduces total streamwise flow momentum through the blade passage, reducing blade pressure rise capability and therefore stall margin. A plot of pressure across the blade from root to tip would show a drop in total pressure towards the tip, due to that leakage. Stall margin loss from clearance increases perhaps arises from an interaction between the endwall and the blade suction side boundary layers, a condition that potentially could cause boundary layer flow separation on the suction side, causing flow blockage in that area.

US-A-4781530 (Lauterbach et al.) discloses a compressor with a row of slots formed adjacent the tips of the compressor blades.

The object of the present invention is to "energize" the flow between an endwall in a turbomachineand an adjacentairfoilwhichhaverelativerotationalmovemet to each other, by minimizing the adverseeffect of tip clearancebetween the endwall and the blade tips, hereby enhancing the streamwise momentum and producing efficient mixing of the endwall flows.

According to a first aspect of the present invention, there is provided a compressor comprising an endwall and an airfoil having relative rotational movement to each other, characterised in that it additionally comprises:
an insert between the endwall and a tip of the airfoil, the insert comprising a plurality of cells, each cell being exposed to the high and low pressure sides of the airfoil as relative rotation occurs and lying at a compound angle to the direction of said rotation to capture air from the high pressure side of the airfoil as the airfoil approaches the cell and release said air to the low pressure side of the airfoil as it moves away from the cell.

According to a second aspect of the present invention, there is provided a turbine comprising an endwall and an airfoil having relative rotational movement to each other;
characterized in that it additionally comprises an insert between the endwall and a tip of the airfoil, the insert comprising a plurality of cells, each cell being exposed to the low and high pressure sides of the airfoil as relative rotation occurs and lying at a compound angle to the direction of rotation, so that the pressure in the cell is lowered as it is exposed to the low pressure side of the airfoil and flow is induced into the cell as the airfoil transits the cell.

In a preferred embodiment of the first aspect, a shroud insert is placed in the endwall around the compressor blades that contain dead-ended honeycomb cells inclined at a compound angle. One angle component is relative to a tangential axis in the direction of blade rotation and the second angle component is relative to the radial (normal) orientation of the blades. As the blade pressure side advances, the honeycomb cells are "charged" with pressure side air and as the blade crosses each cell, the cell vents to the suction side, producing a transient jet of high velocity flow emanating from the cell that energizes the endwall flow.

The compound angle of the cell is selected to achieve two main objectives. The cell is oriented to face the advancing blade pressure side to capture the dynamic pressure imparted by the moving blade. This ensures that the cell is charged with air that is effective in producing an effective jet inducing pressure ratio. Also, the cell's orientation is preferably along the chord of the blade, so that that the resulting jet direction has a significant component in the streamwise direction, which enhances the streamwise flow momentum. The high velocity jets from the cells at this compound angle produce efficient mixing of the outermost endwall flows (the stability impacting region) without disrupting the main flow, which minimizes efficiency losses. Components of the jets in the streamwise direction augment the streamwise momentum, a condition evidenced by the increased total pressure in the tip region.

The cell size is selected to result in a cell emptying time constant that is a fraction of the blade passing time period. The cell diameter (normal to the cell axis) is preferably in the order of the blade thickness, and the cell length of depth (along the cell axis) is preferably in the range of one to seven times.

A feature of embodiments of the invention is that it provides superior stall margin characteristics with minimal loss in compressor efficiency by energizing the flow field near the endwall (whether it is stationary or rotating). Another feature is that it can be used to improve the lift characteristics between an endwall and the tip of a lifting surface. For instance, in a compressor stator section, an insert with these cells can be placed on the rotating drum that faces the stator vane tips. A preferred embodiment of the invention will now be described by way of example only, with reference to the accompanying drawings, in which:

Fig. 1 is a sectional along line 1-1 of a typical gas turbine engine, shown in Fig. 8.

Fig. 2 is a plan view of section of a shroud surrounding the compressor blades of an engine according to the present invention.

Fig. 3 is a section along line 3-3 in Fig. 2.

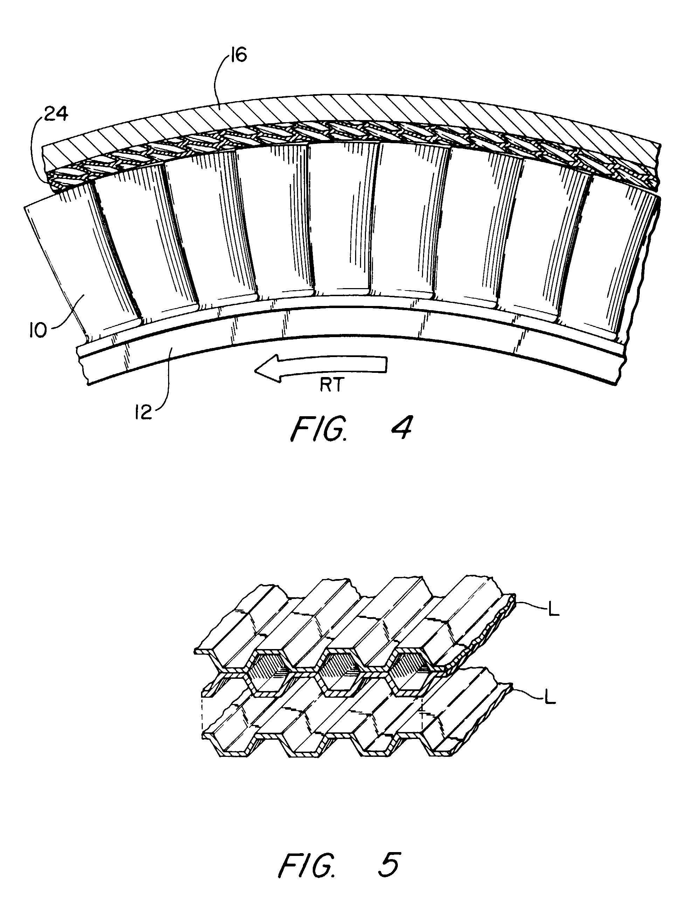

Fig. 4 is a section along line 4-4 in Fig. 2.

Fig. 5 is an exploded view showing two layers of the shroud.

Fig. 6 is a perspective of several cells in the shroud.

Fig. 7 is an enlargement showing a blade tip and an adjacent layer of the shroud.

Fig. 8 shows a gas turbine engine in which the shroud is included.

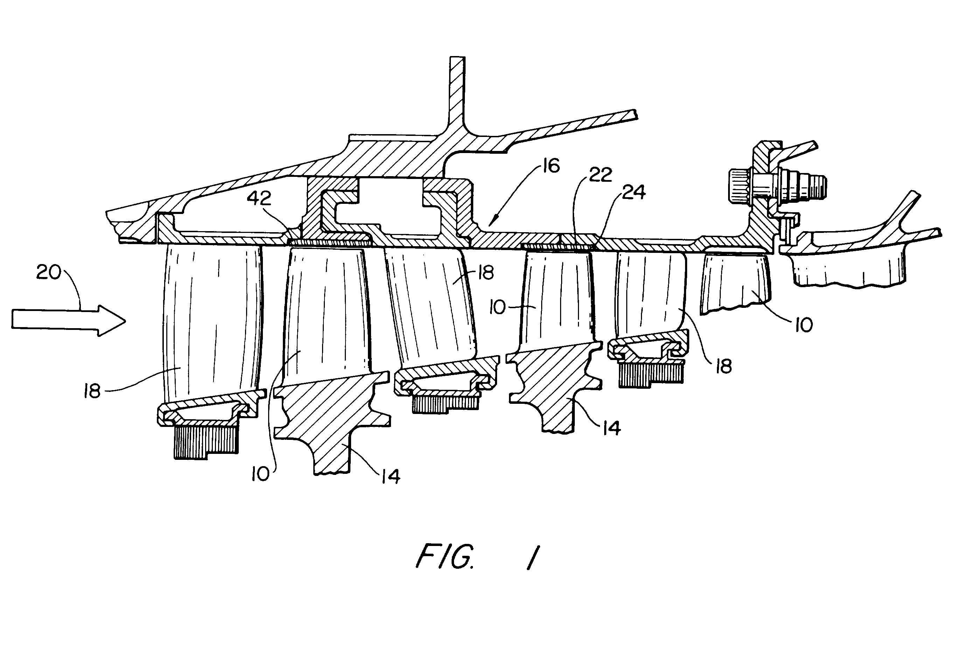

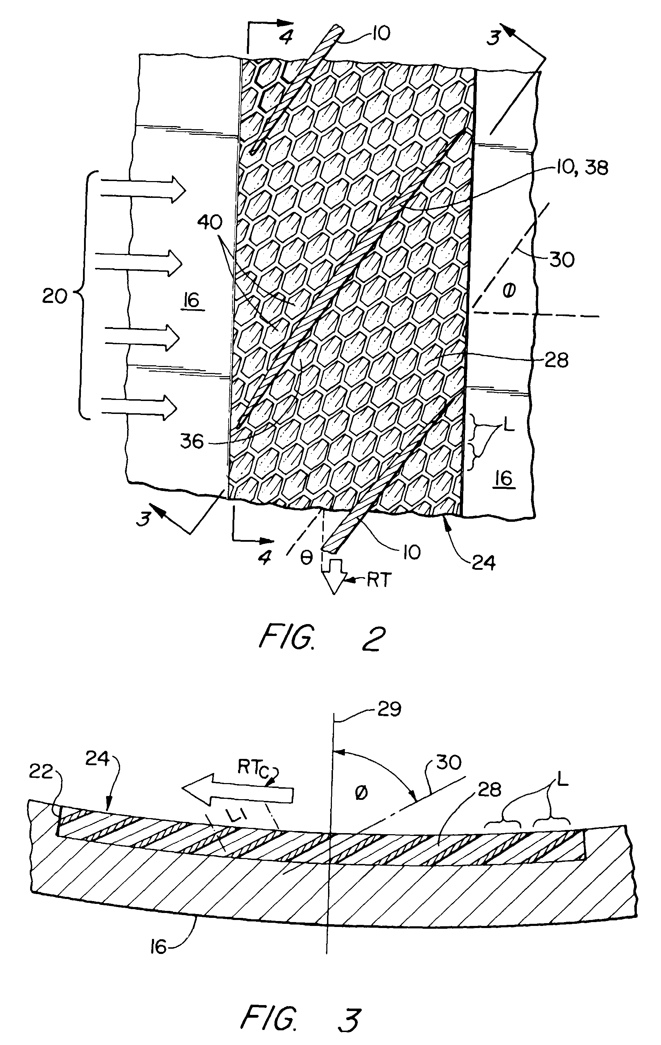

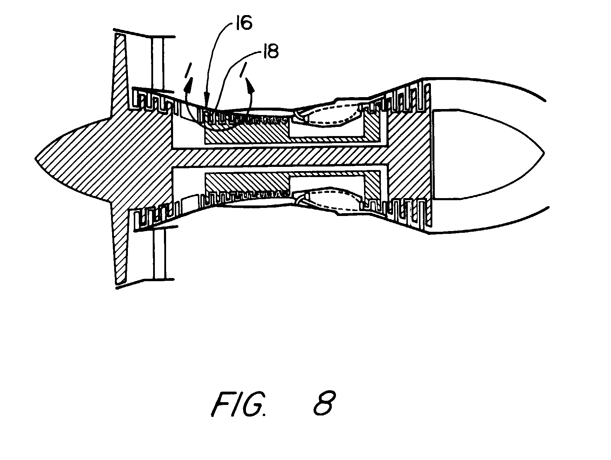

In Fig. 1 a plurality of compressor turbine blades 10 are attached to respective compressor disks 14 with a case 16. The blades and disks are part of typical compressor section in a gas turbine engine, shown in Fig. 8. Stator vanes 18 are located upstream of the blades 10 to direct airflow 20. A circumferential seat 22 is provided in the case 16 to receive a ring insert 24 comprising layers of honeycomb cells 28, these being better shown in the enlarged view in Fig. 2. There, the arrow RT indicates the direction of blade rotation and the airflow to the compressor is again the arrow number 20. Fig. 1, shows that the insert 24 is constructed of layers L of the cells 28, and the cells, it will be noted, are oriented at a compound angle: one angle θ, a second angle φ. The angle θ defines the displacement of the cell axis 30 from the blade tangential direction, RT in Fig. 2.. The angle φ defines the displacement of the cell axis from the normal (radial direction) 29 as shown in Fig. 3. It is perhaps easier to see in Fig. 3 that the cell axis 30 is oriented such that cell opening faces the advancing blade, moving in direction RT. The cells are also on the chord line of the blades. The significance of these characteristics will be explained below.

As the blades rotate they sweep past the cells 28. This exposes the cells to different pressure conditions as a function of blade position. For example, refer to the one cell 36, and the blade 38 in Fig. 2, which shows the blade location at t₀. The cell is located at the high pressure side of the blade 36, but as the blade rotates in the direction RT it will be exposed to the low pressure side at a later time t₊₁, as are the cells 40, which were pressurized at an early time (blade position) t₀. For clarity, it should be observed that arrow RTc in Fig. 3 indicates the component of blade velocity along the line 3-3 in Fig. 2.

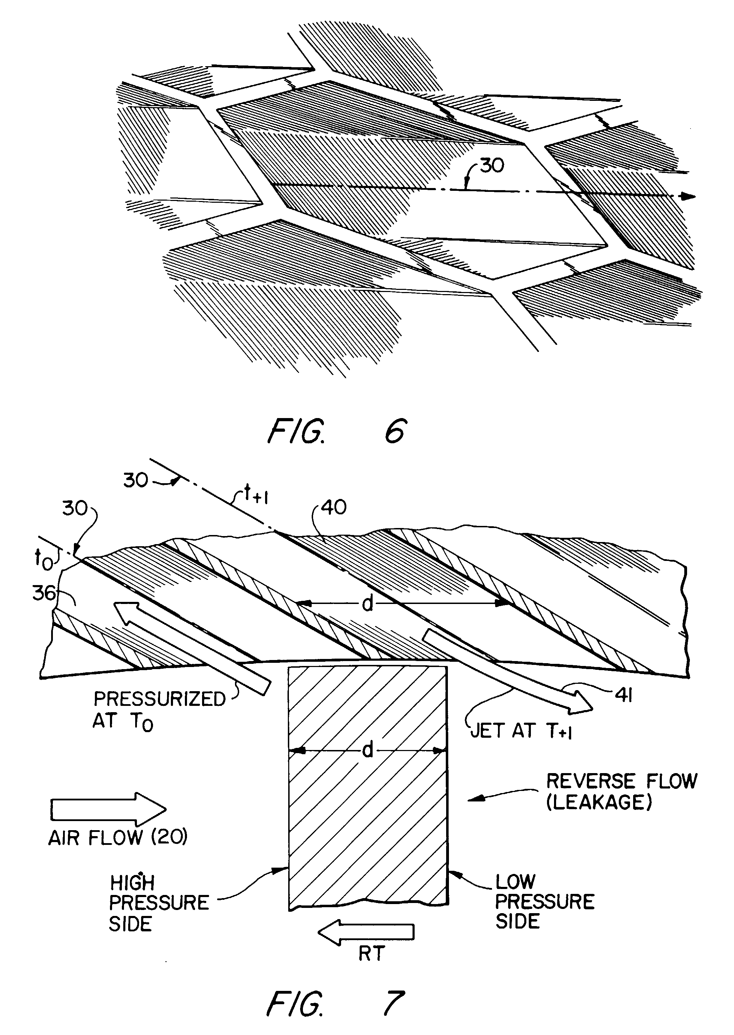

Referring to Fig 7, the cell 40, pressurized initially at t₀ from the high pressure side, as is the cell 36, provides a burst or jet of air 41 to the low pressure side of the blade after the blade passes over the cell. In addition to orientation of the cells relative to the blade or "air foil or lifting surface", the blade thickness should preferably be about d, the diameter of the cell and the depth or thickness of the cell L1 preferably at least equal to d and most preferably four times d. The ratio is important because it controls the time constant associated with the charging and discharging of the cell. The transient jets, with velocity components in the blade passage direction (due to the compound angle), produce energized flow at the blade tip, which causes efficient mixing, thereby preventing any potential flow separation in the endwall region.

The magnitude of the θ and φ depends on the specific compressor design, but essentially so that the cells are charged correctly and the outflow, energizing jet on the low pressure side is correctly oriented. Exemplary values for those angles are as follows: θ=34 degrees and φ = 60 degrees.

The invention significantly improves the stall margin of the compressor with minimum efficiency loss by efficiently energizing the endwall flow field. Tests of the design have also shown that the orientation of the cell angles is such as to make the insert a good abradable seal because the angled cells are shaved off easily without wearing the blade when a blade tip, having an abrasive tip (known in the art) rubs against the insert.

The flow energizing effect provided by the invention may be employed in the turbine section of a gas turbine engine by inserting a similar honeycomb insert around the turbine blades--but with an important difference in the cell pressurization as the turbine blade rotates. In the compressor embodiment described above, the cell is first exposed to the pressure side of the blade and then the lower pressure side. In a turbine, the cell is first exposed to the low pressure side, lowering the pressure in the cell and thereby inducing flow into the cell when the blade transits the cell. Leakage through the clearance between the turbine tip and the endwall is reduced by this, improving turbine efficiency.

With the benefit of the foregoing discussion and explanation, one of ordinary skill in the art may be able to modify, in whole or in part, a disclosed embodiment of the invention without departing from the scope of the invention.

## Claims

1. A compressor comprising an endwall (16) and an airfoil (10) having relative rotational movement to each other, characterised in that it additionally comprises:
an insert (24) between the endwall (16) and a tip of the airfoil (10), the insert comprising a plurality of cells (28), each cell being exposed to the high and low pressure sides of the airfoil as relative rotation occurs and lying at a compound angle to the direction (RT) of said rotation to capture air from the high pressure side of the airfoil as the airfoil approaches the cell and release said air to the low pressure side of the airfoil as it moves away from the cell.

2. A compressor as claimed in claim 1, further characterised by the insert (24) comprising a plurality of cells (28) in which each cell extends towards the tip along a line defining the chord of the airfoil and at angle (θ) greater than ten degrees to a line that is tangential to the direction (RT) of the relative motion of the airfoil, and the diameter of each cell substantially equals the airfoil thickness (d) and the cell depth (L₁) is at least equal to the diameter of the cell.

3. A compressor as claimed in claim 1 or 2, wherein said airfoil is a stator vane.

4. A compressor as claimed in claim 1 wherein said airfoil is a compressor blade, and said relative motion is achieved by rotation of the compressor blade.

5. A compressor as claimed in claim 4, further characterised in that each cell is oriented at an acute angle (θ) to the tangential direction (RT) in the direction of blade rotation to point downstream in the streamwise direction and at an acute angle (φ) to a line (29) normal to the case.

6. A compressor as claimed in claim 5 wherein the angle φ is greater than 30°.

7. A compressor as claimed in claim 5 or 6 wherein the angle θ is greater than 10°.

8. A compressor as claimed in any of claims 4 to 7, further characterised in that the cells (28) are polygons with a diameter that substantially equals the blade thickness (d) and a depth (L₁) that is no less than the diameter.

9. A compressor as claimed in claim 8, further characterised in that the depth (L₁) is more than the diameter.

10. A compressor as claimed in any of claims 4 to 9 wherein said cells are oriented in the direction of the blade chord.

11. A compressor as claimed in any preceding claim, further characterised in that said insert (24) comprises layers of honeycomb sheets each comprising said cells.

12. A gas turbine engine comprising a compressor as claimed in any preceding claim.

13. A turbine comprising an endwall and an airfoil having relative rotational movement to each other;
characterized in that it additionally comprises an insert between the endwall and a tip of the airfoil, the insert comprising a plurality of cells, each cell being exposed to the low and high pressure sides of the airfoil as relative rotation occurs and lying at a compound angle to the direction of rotation, so that the pressure in the cell is lowered as it is exposed to the low pressure side of the airfoil and flow is induced into the cell as the airfoil transits the cell.

## Patentansprüche

1. Verdichter aufweisend eine Begrenzungswand (16) und ein Strömungsprofil (10), die eine Relativ-Rotationsbewegung gegeneinander ausführen,
**gekennzeichnet durch,**
einen Einsatz (24) zwischen der Begrenzungswand (16) und einer Spitze des Strömungsprofils (10), wobei der Einsatz eine Mehrzahl von Zellen (28) aufweist, wobei jede Zelle der Hochdruckseite und der Niederdruckseite des Strömungsprofils ausgesetzt ist, wenn es zu einer Relativrotation kommt, und mit einem Kombi-Winkel zu der Richtung (RT) der Rotation liegt, um Luft von der Hochdruckseite des Strömungsprofils einzufangen, wenn sich das Strömungsprofil an die Zelle heranbewegt, und die Luft zu der Niederdruckseite des Strömungsprofils abzugeben, wenn sich dieses von der Zelle wegbewegt.

2. Verdichter nach Anspruch 1, ferner
**dadurch gekennzeichnet,**
daß der Einsatz (24) eine Mehrzahl von Zellen (28) aufweist, wobei sich jede Zelle in Richtung zu der Spitze entlang einer Linie, welche die Profilsehne des Strömungsprofils definiert, und mit einem Winkel (θ), der größer als 10 Grad ist zu einer Linie, die tangential zu der Richtung (RT) der Relativbewegung des Strömungsprofils ist, erstreckt, und der Durchmesser einer jeden Zelle im wesentlichen gleich der Dicke (d) des Strömungsprofils ist und die Zellentiefe (L₁) mindestens gleich dem Durchmesser der Zelle ist.

3. Verdichter nach Anspruch 1 oder 2, wobei das Strömungsprofil eine Statorleitschaufel ist.

4. Verdichter nach Anspruch 1, wobei das Strömungsprofil eine Verdichterlaufschaufel ist und die Relativbewegung durch ein Rotieren der Verdichterlaufschaufel bewirkt wird.

5. Verdichter nach Anspruch 4, ferner
**dadurch gekennzeichnet,**
daß jede Zelle mit einem spitzen Winkel (θ) zu der Tangentialrichtung (RT) in der Richtung der Laufschaufelrotation orientiert ist, um strömungsabwärts in die Strömungsrichtung zu zeigen, und mit einem spitzen Winkel (φ) zu einer Linie (29), die rechtwinklig zu dem Gehäuse verläuft, angeordnet ist.

6. Verdichter nach Anspruch 5, wobei der Winkel (φ) viel größer als 30° ist.

7. Verdichter nach Anspruch 5 oder 6, wobei der Winkel (θ) größer als 10° ist.

8. Verdichter nach einem der Ansprüche 4 bis 7, ferner
**dadurch gekennzeichnet,**
daß die Zellen (28) Polygone sind mit einem Durchmesser, der im wesentlichen der Dicke (d) der Laufschaufel gleicht und einer Tiefe (L₁) die nicht kleiner als der Durchmesser ist.

9. Verdichter nach Anspruch 8, ferner
**dadurch gekennzeichnet,**
daß die Tiefe (L₁) größer ist als der Durchmesser.

10. Verdichter nach einem der Ansprüche 4 bis 9. wobei die Zellen in der Richtung der Laufschaufelprofilsehne orientiert sind.

11. Verdichter nach einem der vorhergehenden Ansprüche, ferner
**dadurch gekennzeichnet,**
daß der Einsatz (24) Lagen aus Wabenflachmaterial aufweist, das jeweils die Zellen aufweist.

12. Gasturbinenmaschine aufweisend einen Verdichter nach einem der vorangehenden Ansprüche.

13. Turbine aufweisend eine Begrenzungswand und ein Strömungsprofil, die eine Relativ-Rotationsbewegung gegeneinander ausführen;
**dadurch gekennzeichnet,**
daß sie zusätzlich einen Einsatz zwischen der Begrenzungswand und einer Spitze des Strömungsprofils aufweist, wobei der Einsatz eine Mehrzahl von Zellen aufweist, wobei jede Zelle der Niederdruckseite und der Hochdruckseite des Strömungsprofils ausgesetzt ist, wenn es zu einer Relativrotation kommt und mit einem Kombi-Winkel zu der Rotationsrichtung liegt, so daß der Druck in der Zelle abgesenkt wird, wenn sie der Niederdruckseite des Strömungsprofils ausgesetzt ist, und eine Strömung in die Zelle induziert wird, wenn das Strömungsprofil über die Zelle hinweggeht.

## Revendications

1. Compresseur comprenant une paroi d'extrémité (16) et une structure portante (10) animées d'un mouvement de rotation relative entre elles, caractérisé en ce qu'il comprend en outre :
un insert (24) situé entre la paroi d'extrémité (16) et un bout de la structure portante (10), l'insert comprenant une pluralité d'alvéoles (28), chaque alvéole étant exposée aux côtés haute pression et basse pression de la structure portante lorsqu'une rotation relative se produit et se trouvant selon un angle composé par rapport au sens (RT) de ladite rotation pour capter l'air issu du côté haute pression de la structure portante lorsque la structure portante se rapproche de l'alvéole et pour libérer ledit air vers le côté basse pression de la structure portante tandis qu'elle s'éloigne de l'alvéole.

2. Compresseur selon la revendication 1, caractérisé, en outre, en ce que l'insert (24) comprend une pluralité d'alvéoles (28) dans lequel chaque alvéole s'étend en direction du bout selon une ligne définissant la corde de la structure portante et selon un angle θ plus grand que dix degrés en direction d'une ligne qui est tangentielle à la direction (RT) du mouvement relatif de la structure portante, et le diamètre de chaque alvéole est sensiblement égal à l'épaisseur (d) de la structure portante et la profondeur de l'alvéole (L₁) est au moins égale au diamètre de l'alvéole.

3. Compresseur selon la revendication 1 ou 2, dans lequel ladite structure portante est une aube de stator.

4. Compresseur selon la revendication 1, dans lequel ladite structure portante est une pale de compresseur et ledit mouvement relatif est obtenu par la rotation de la pale du compresseur.

5. Compresseur selon la revendication 4, caractérisée, en outre, en ce que chaque alvéole est orientée selon un angle aigu θ vers la direction tangentielle (RT) dans la direction de la rotation des pales pour pointer en aval dans le sens de l'écoulement du courant et selon un angle aigu (φ) en direction d'une ligne (29) normale au logement.

6. Compresseur selon la revendication 5, dans lequel l'angle φ est plus grand que 30°.

7. Compresseur selon la revendication 5 ou 6, dans lequel l'angle θ est plus grand que 10°.

8. Compresseur selon l'une quelconque des revendications 4 à 7, caractérisé, en outre, en ce que les alvéoles (28) sont des polygones présentant un diamètre qui est sensiblement égal à l'épaisseur de la pale (d) et une profondeur (L₁) qui n'est pas inférieure au diamètre.

9. Compresseur selon la revendication 8, caractérisé, en outre, en ce que la profondeur (L₁) est plus grande que le diamètre.

10. Compresseur selon l'une quelconque des revendications 4 à 9, dans lequel lesdites alvéoles sont orientées dans la direction de la corde de la pale.

11. Compresseur selon l'une quelconque des revendications précédentes, caractérisé, en outre, en ce que ledit insert (24) comprend des couches de feuilles en nid d'abeille comprenant chacune lesdites alvéoles.

12. Turbine à gaz comprenant un compresseur selon l'une quelconque des revendications précédentes.

13. Turbine comprenant une paroi d'extrémité et une structure portante présentant un mouvement de rotation relative entre elles ;
caractérisée en ce qu'elle comprend, en outre, un insert présent entre la paroi d'extrémité et un bout de la structure portante, l'insert comprenant une pluralité d'alvéoles, chaque alvéole étant exposée aux côtés basse pression et haute pression de la structure portante lorsqu'une rotation relative se produit et se trouvant selon un angle composé par rapport au sens de la rotation, de sorte que la pression dans l'alvéole est abaissée lorsqu'elle est exposée au côté basse pression de la structure portante et qu'un écoulement est induit dans l'alvéole lorsque la structure portante passe devant l'alvéole.
